# EUROPÄISCHE PATENTANMELDUNG

(11) **EP 3 906 987 A1**
(43) Veröffentlichungstag der Anmeldung: **10.11.2021**
(21) Anmeldenummer: 21170692.4
(22) Anmeldetag: 27.04.2021
(51) Int. Cl.: B01D 29/15, B01D 35/16, B01D 36/00

(54) **FILTER**

(30) Priorität: 09.05.2020 DE 102020002769
(71) Anmelder: HYDAC FluidCareCenter GmbH, 66280 Sulzbach/Saar (DE)
(72) Erfinder: Hoffmann, Florian, 66578 Schiffweiler (DE)
(74) Vertreter: Bartels und Partner, Patentanwälte

(57) **Zusammenfassung**

1. Filter
2. Ein Filter, insbesondere Kraftstofffilter, vorzugsweise in Form eines Dieselfilters, mit einem Filtermedium (16), das sowohl der Partikelabreinigung als auch der Koaleszenz von Wasser dient, das in einem das Filtermedium (16) durchströmenden Fluid mitgeführt, ist dadurch gekennzeichnet, dass das Filtermedium (16) zumindest einen antimikrobiellen Wirkstoff aufweist, der zumindest an das koaleszierte Wasser abgegeben wird.

## Beschreibung

Die Erfindung betrifft einen Filter, insbesondere Kraftstoffilter, vorzugsweise in Form eines Dieselfilters, mit einem Filtermedium, das sowohl der Partikelabreinigung als auch der Koaleszenz von Wasser dient, das in einem das Filtermedium durchströmenden Fluid mitgeführt ist.

Durch EP 3 104 953 B1 ist ein Kraftstoff-Filterelement zur Behandlung von Fluiden in Form von Diesel bekannt mit einem Filtermedium, das von dem jeweiligen Fluid durchströmbar ist, wobei das Filtermedium zumindest einen Wirkstoff mit antimikrobiellen Eigenschaften aufweist, der mindestens eine Komponente hat, die eine ionische Zerstörung einer Bakterienzellwand ermöglicht und eine weitere Komponente aufweist, die zu einer physischen Unterbrechung einer Bakterienzellmembran führt.

Vorzugsweise besteht der jeweilige Wirkstoff aus einer Silikatverbindung, beispielsweise aus einer Ammonium-Silikatverbindung und weist vorzugsweise ein Biozid, vorzugsweise ein Breitbandbiozid, auf.

Dank dieser Eigenschaften lassen sich die gegebenenfalls im (Bio-) Dieselkraftstoff vorhandenen Bakterien, Mikroorganismen oder Pilze sowie vergleichbar in der Natur vorkommende biologische Strukturen in einen Zustand bringen, dass sie auf den (Bio-)Dieselkraftstoff keinen schädlichen oder schädigenden Einfluss mehr ausüben können, was auch für die sonstigen fluidführenden Komponenten gilt, wie Tank, Kraftstoffleitung, Kraftstofffilter, Motor und dessen Einspritzdüsen (common-rail-system). Ferner ist der Diesel gegen biologischen Abbau durch das biologische Eintragsmaterial wie Bakterien, Mikroorganismen oder Pilzen etc. geschützt. Der bekannte Dieselfilter weist im Inneren des Filterelementes ein hydrophobes Sieb in Zylinderform auf, das der Wasserabscheidung dient und für das kraftstoffgeführte Wasser koaleszierend wirkt, sodass das Wasser in Tröpfchen-Form aus dem Kraftstoff ausfällt und aus dem Filter abgeführt werden kann.

Ausgehend von diesem Stand der Technik liegt der Erfindung die Aufgabe zugrunde, den bekannten Filter weiter zu verbessern.

Dadurch, dass gemäß dem kennzeichnenden Teil des Patentanspruches 1 das Filtermedium zumindest einen antimikrobiellen Wirkstoff aufweist, der zumindest an das koaleszierte Wasser abgegeben wird, kann das derart koaleszierte Wasser frei gehalten werden von Bakterien, Mikroorganismen oder Pilzen sowie vergleichbar in der Natur vorkommenden biologischen Strukturen. Dies spielt insbesondere dann eine Rolle, wenn das aus dem Filter abgeschiedene und koaleszierte Wasser in einen Wassersammler eines Filtergehäuses der zugehörigen Filtervorrichtung gelangt, worin das abgeschiedene Wasser durchaus längere Zeit vor einem Ablassen gesammelt wird, und insoweit regelmäßig eine Brutstätte für die vorstehend genannten biologischen Strukturen bildet.

Da der Flüssigkeitsstand, respektive Wasserstand, im Wassersammler der genannten Filtervorrichtung überwacht wird, könnte ein etwaiger Bewuchs des zugehörigen Flüssigkeitsstandsensors zu Fehlfunktionen führen, was derart gleichfalls vermieden ist. Zur Beobachtung des Wasserstandes von außen ist der genannte Wassersammelraum regelmäßig in einem durchsichtigen Sammelgefäß am unteren Ende der vertikal eingebauten Filtervorrichtung angeordnet und bei einem entsprechenden Bewuchs mit biologischen Strukturen auf der Innenseite des Sammelgefäßes wäre ansonsten die optische Überwachung des Flüssigkeitsstandes erschwert, weil einfach die Klarsicht dann verloren geht.

Es ist für einen Fachmann selbstverständlich, dass die vorstehend beschriebene Ausrüstung natürlich nur dann Sinn macht, wenn auch Wasser im Fluid vorhanden ist und eine Abreinigung von Partikeln kann natürlich über das Filtermedium nur dann erfolgen, wenn eine solche Partikelverschmutzung im Fluid auch vorliegt.

Da der antimikrobielle Wirkstoff im Filtermedium mehr oder minder intrinsisch integriert ist, ist auch ein Bewuchs des Filtermediums respektive der Filtermatte mit den genannten biologischen Strukturen verhindert. Ferner kann durch die aktive Zerstörung der jeweiligen biologischen Struktur unter dem Einfluss des antimikrobiellen Wirkstoffes diese in eine Art im Fluid aufgelösten Zustand gelangen, sodass das angesprochene biologische Eintragsmaterial selbst nicht-reaktiver Bestandteil des Fluids wird, das insoweit dann hemmnisfrei in Diesel-Kraftstoffkreisläufen oder sonstigen Arbeitskreisläufen geführt werden kann. Dies schont nicht nur das common-rail-system von Dieselmotoren, sondern führt auch zu längeren Filterstandzeiten bei dem jeweils eingesetzten Filter.

Als besonders vorteilhaft hat es sich erwiesen, zur Vergrößerung der wirksamen Filteroberfläche das Filtermedium zu plissieren und bevorzugt für das Filtermedium Polyethylenterephthalat (PET)-Fasern zum Einsatz zu bringen. Dahingehende PET-Fasern nehmen regelmäßig nur ausgesprochen wenig Wasser auf, was die beabsichtigte Koaleszenz für das abzuscheidende Wasser begünstigt. Es können für das jeweilige Filtermedium des Filtermediums aber auch andere gängige Materialien verwendet werden, wie Polyamide (PA), glasfaserverstärkte Kunststoffe (GF) sowie Zellulosematerialien. Das jeweils eingesetzte Filtermedium kann einlagig ausgebildet sein, aber auch als Multi-Layer aufgebaut sein.

Bei einer besonders bevorzugten Ausführung des erfindungsgemäßen Filters ist vorgesehen, dass in Fluidströmungsrichtung gesehen dem Filtermedium nachfolgend und von diesem räumlich separiert eine Trennstufe vorhanden ist, die das vom Filtermedium stammende koaleszierte Wasser vom sonstigen Fluid derart trennt, dass das Wasser und das sonstige Fluid voneinander an verschiedenen Stellen den Filter verlässt. Vorzugsweise ist die dahingehende Trennstufe aus einem Siebgewebe gebildet, das hydrophobe Eigenschaften aufweist und das von dem Filtermedium unter Beibehalten eines radialen Abstandes umfasst ist. Aufgrund der hydrophoben Eigenschaften des Siebgewebes wird der von Partikeln abgereinigte Kraftstoff durchgelassen und gleichzeitig die koaleszierten Wassertropfen vom Kraftstoff getrennt und bevorzugt dem Wassersammelraum der Filtervorrichtung zugeführt, die aufgrund der Schwerkraft nach unten hin abfliessen.

Bei einer weiteren besonders bevorzugten Ausführungsform des erfindungsgemäßen Filters ist vorgesehen, dass zumindest ein antimikrobieller Wirkstoff eingesetzt ist, der mit dem koaleszierten Wasser eine Suspension bildend elektrisch leitend ist und vorzugsweise Zink-Pyrithion aufweist oder vollständig aus Zink-Pyrithion besteht. Das aus dem Fluid abzuscheidende Wasser entsteht meist durch Kondensation, insbesondere im Kraftstoffsystem, wie einem Tank. Im Reinzustand ist das dahingehend auskondensierte Wasser arm an elektrisch leitenden Ionen und die üblicherweise verwendeten Sensoren wie Füllstandsensoren, die auf dem Betrieb der Messung von Widerstandsänderungen beruhen, können solches Wasser im Reinzustand nicht detektieren.
Zink- Pyrithion, das als Zinksalz des Pyrithion gilt, ist an sich ein farbloser Feststoff mit antimykotischen und antibakteriellen Eigenschaften. Durch seine geringe Löslichkeit in Wasser eignet sich Zink- Pyrithion besonders als Schutz gegen schimmelbildende Mikroorganismen. Aufgrund seines Salzcharakters, wobei Salze aus positiv geladenen Ionen (Kationen) und negativ geladen Ionen (Anionen) aufgebaut sind, wird dergestalt bei Eintrag in das koaleszierte Wasser die Leitfähigkeit derart verbessert, dass die genannten Sensoren ohne Weiteres das Wasser dann detektieren können. Insoweit ist also Zink- Pyrithion als ein elektrisch leitender Wirkstoff anzusehen.

Weitere bevorzugte Ausführungsformen des erfindungsgemäßen Filters betreffen seine Verwendung, insbesondere in einer Filtervorrichtung sowie Aspekte betreffend sein Herstellverfahren.

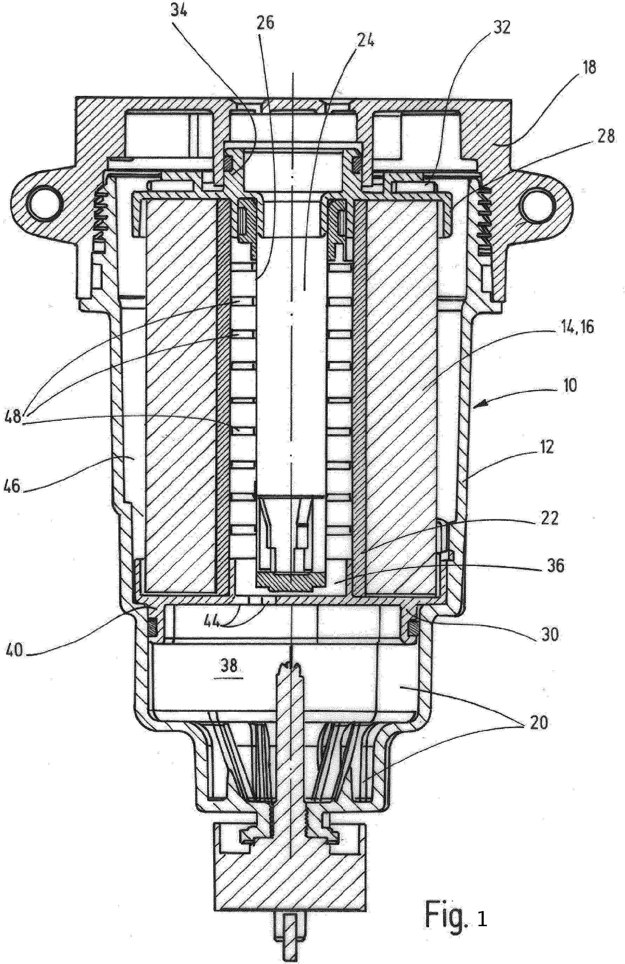

Im Folgenden wird der erfindungsgemäße Filter im eingebauten Zustand in einem Filtergehäuse einer Filtervorrichtung näher erläutert. Dabei zeigt in prinzipieller und nicht maßstäblicher Darstellung die einzige Figur in der Art eines Längsschnitts das in einem Filtergehäuse eingebaute Filterelement.

Die Figur zeigt ein Ausführungsbeispiel der Erfindung in Form eines Kraftstofffilters für mit Wasser beladenen Dieselkraftstoff mit einem Filtergehäuse 10 mit einem im Großen und Ganzen hohlzylinderischen Gehäusehauptteil 12 für die Aufnahme eines Filterelementes 14. Das Filterelement 14 mit seinem Filtermedium 16 bildet die wesentlichen Bestandteile des Filters aus. In Blickrichtung auf die Figur gesehen, ist das Gehäusehauptteil 12 am oberen Ende durch ein aufgeschraubtes Deckelteil 18 dichtend abgeschlossen. Das Hauptteil 12 verjüngt sich in Richtung seines unteren Endes in Stufen, wobei der derart gebildete untere Abschnitt 20 als Wassersammelraum konzipiert ist. Das Filtermedium 16 wird von außen nach innen durchströmt und weist auf seiner Innenseite ein zylindrisches Stützrohr 22 auf, das mit nicht dargestellten Fluiddurchlässen versehen ist, um dergestalt einen Fluiddurchtritt in den Innenraum 24 des Filterelementes 14 zu ermöglichen.

Die Fluideintrittsstelle in das Gehäusehauptteil 12 für den Unfiltrateintritt, erfolgt an dessen oberem Ende und ist nicht dargestellt. Auf der Innenseite des Stützrohres 22 und mit radialem Abstand angeordnet, ist ein rohrförmiges Siebgewebe 26 vorhanden, das in Fluidströmungsrichtung gesehen dem Filtermedium 14 nachfolgend und von diesem radial räumlich separiert eine Trennstufe ausbildet. Sowohl das Filterelement 14 als auch das Siebgewebe 26 ist jeweils endseitig in einer Endkappe 28 aufgenommen, sodass insoweit ein tauschbarer Filter entsteht, der mittels einer hochklappbaren, bügelförmigen Handhabe 32 aus dem Hauptteil 12 von Hand herausgenommen werden kann, sofern das Deckelteil 18 vom Hauptteil 12 abgeschraubt ist. Insbesondere im Verbrauchsfall, bei dem das Filtermedium 16 von Partikelverschmutzung zugesetzt ist, lässt sich dergestalt ein Altelement gegen ein unverbrauchtes Neuelement tauschen. In Blickrichtung auf die Figur gesehen, weist die obere Endkappe 28 einen ringförmigen Vorsprung 34 auf, der in eine entsprechende Auskragung im Deckelteil 18 mittels eines O-Ringes abgedichtet eingreift.

Das von partikulären Verschmutzungen abgereinigte Fluid, insbesondere in Form von Dieselkraftstoff, verlässt das Filterelement 14 auf seiner Innenseite, durchquert die Sieböffnungen im Siebgewebe 26 und wird dann über den Innenraum 24 in Blickrichtung auf die Figur gesehen, nach oben hin aus dem Filtergehäuse 10 abgeführt. Die Auslassöffnung, die sich im Deckelteil 18 befindet und insoweit an den ringförmigen Vorsprung 34 der oberen Endkappe 28 anschließt, ist der einfacheren Darstellung wegen nicht gezeigt.

Sofern sich in dem Fluidstrom, der das Filterelement 14 von außen nach innen durchströmt, Wasser befindet, wird dieses mittels des Filtermediums 16 zu größeren Wassertropfen koalesziert und das dahingehende Wasser gelangt nach Durchqueren des Stützrohres 22 in einen Zwischenraum 36 zwischen der Innenumfangsseite des Stützrohres 22 und der Außenumfangsseite des rohrförmigen Siebgewebes 26. Das insoweit hydrophobe Siebgewebe 26 verstärkt weiter die Tropfenbildung und sorgt dafür, dass das mittels des Filtermediums 16 koaleszierte Wasser auf der Oberseite des Siebgewebes 26 schwerkraftbedingt nach unten in den jeweiligen Abschnitt 20, der als Wassersammelraum 38 dient, einfließen kann.

Wie die Figur weiter zeigt, ist die untere Endkappe 30 gleichermaßen mit einem weiteren ringförmigen Vorsprung 40 mittels eines O-Ringes in abgedichteter Weise auf der Innenwandseite des Gehäusehauptteils 12 im Bereich des oberen Abschnitts 20 geführt. In den Wassersammelraum 38 hinein ragt ein Flüssigkeitsstandsensor 42, der das Fluidniveau im Wassersammelraum 38 überwacht und bei einer entsprechenden Füllstandsmenge eine Bedienperson veranlasst, das Wasser aus dem Wassersammelraum 38 abzulassen, wobei dieser Vorgang auch mittels eines ansteuerbaren Ventiles (nicht dargestellt) automatisiert werden kann. Anstelle eines Flüssigkeitstandsensors 42 kann auch eine Überwachung der Wasser-Niveaulage durch optische Betrachtung erfolgen, wobei es dann vorteilhaft, ist die Abschnitte 20 des Hauptteils 12 durchsichtig zu gestalten, beispielsweise indem zumindest teilweise die Abschnitte 20 aus einem durchsichtigen Kunststoffkörper bestehen, der von unten her an das Hauptteil 12 anschraubbar ist.

Damit das koaleszierte, abgeschiedene Wasser in den Wassersammelraum 38 ungestört gelangen kann, sind in der unteren Endkappe 30 entsprechende Durchlassöffnungen 40 angebracht, von denen in der Figur nur zwei dargestellt sind, die insoweit eine fluidführende Verbindung zwischen dem Zwischenraum 36 und dem Wassersammelraum 38 herstellen. Um eine gute Fluidverteilung entlang des Außenumfanges des Filtermediums 16 zu ermöglichen, ist zwischen der Innenwandseite des Gehäusehauptteils 12 und der Außenseite des Filtermediums 16 ein umlaufender Eintrittsraum 46 gebildet, für die Aufnahme des regelmäßig mit Verschmutzungen beladene und mit Kondensat (Wasser) versehene Fluid, wie Diesel-Kraftstoff. Das fluiddurchlässige Stützrohr 22 kann gleichfalls in der Art einer Siebstruktur ausgebildet sein, wobei zwischen den Siebflächen ringförmige Querrippen 48 verlaufen, von denen nur einige in der Figur beziffert sind. Dergestalt ist eine besonders ausgesteifte Stützstruktur für das Filtermedium 16 des Filterelementes 14 erreicht, so dass sich die in der Figur gezeigte Filtervorrichtung mit seinem Filtergehäuse 10 und Filterelement 14 auch bei hohen Fluiddrücken betreiben lässt. Eine dahingehende Filtervorrichtung dient regelmäßig als Vorfilter, der regelmäßig zwischen dem Kraftfahrzeugtank und einer Vorförderpumpe angeordnet ist, die das common-rail-system mit Dieselkraftstoff aus dem Tank versorgt.

Wie bereits ausgeführt, dient das Filtermedium 16 sowohl der Partikelabreinigung als auch der Koaleszenz von Wasser, das zusammen mit den Partikeln in einem das Filtermedium 16 durchströmenden Fluids mitgeführt ist. Erfindungsgemäß ist das Filtermedium 16 zumindest mit einem antimikrobiellen Wirkstoff versehen, der zumindest an das koaleszierte Wasser abgegeben wird. Zur Vergrößerung der wirksamen Filteroberfläche ist das Filtermedium 16 plissiert ausgebildet (nicht dargestellt). Ferner werden für das Filtermedium 16 bevorzugt Polyethylenterephthalat-Fasern eingesetzt. Die Filterfeinheit für das derart gebildete, einlagige oder mehrlagige Filtermedium 16 kann zwischen 30 Mikrometer bis 1 Mikrometer reichen.

Bevorzugt wird ein antimikrobieller Wirkstoff eingesetzt, der mit dem koaleszierten Wasser des Filtermediums 16 eine Suspension bildend elektrisch leitend ist. Vorzugsweise wird hierfür das Filtermedium 16 vollständig mit Zink-Pyrithion versetzt, sodass sich der gezeigte Filter dahingehend verwenden lässt, dass in einem Fluid wie Kraftstoff, insbesondere in Form von Diesel, befindliches Wasser bei Durchströmen des Filtermediums 16 zu Tropfen koalesziert und mit dem antimikrobiellen vom Filtermedium 16 stammenden Wirkstoff in Form von Zink-Pyrithion unter Bildung einer wässrigen Suspension versehen wird, die an der Trennstufe des Filters in der Form des Siebgewebes 26 aus dem sonstigen Fluid abgeschieden wird, wobei das von partikulären Verschmutzungen und wasserbefreite Fluid, wie Diesel, den Filter an einer anderen Stelle verlässt als das abgeschiedene Wasser. Vorzugsweise liegen die dabei vorgesehenen Abgabestellen in vertikal entgegengesetzt angeordneten Bereichen im Filtergehäuse.

Der antimikrobielle Wirkstoff, insbesondere in Form des Zink-Pyrithion, wird in Form einer wässrigen Lösung auf das Filtermedium respektive das Filtervlies aufgebracht, vorzugsweise unter Einsatz eines Foulard-oder Sprühauftragverfahrens.

Sofern der Auftrag des antimikrobiellen Wirkstoffs mittels des Sprühauftragverfahrens erfolgt, kann die Porengröße des Filtermediums 16 auf der Ansprühseite durch die Wirkstoffpartikel derart verkleinert werden, dass das Filtermedium 16 einen vorgebbaren Durchströmungsgradienten erhält. Ferner kann vorgesehen sein, dass bei einem Sprühauftrag der WirkstoffPartikel auf eine Abströmseite des Filters die Tiefenfiltrationseigenschaft des Filtermediums 16 respektive des Filters verbessert ist, wobei die Abströmseite der Innenseite des Filtermediums 16 in Richtung des Stützrohres 22 entspricht.

Mit der erfindungsgemäßen Filterlösung ist insgesamt ein antimikrobieller Kraftstoffvorfilter mit Wassersammelraum erhalten, der dadurch charakterisiert ist, dass der Filter antimikrobielle und elektrisch leitende Wirkstoffe an das separierte Wasser abgibt, um dergestalt eine Verkeimung des Wassersammelraumes zu vermeiden und um die Funktionsfähigkeit eines Wasserstandsensors auf der Basis einer elektrischen Widerstandsmessung sicherzustellen. Insgesamt wird durch die erhöhte Leitfähigkeit des Wassers durch Einbringen von Zink-Pyrithion die Wasserdedektion überhaupt ermöglicht respektive deutlich erleichtert.

## Patentansprüche

1. Filter, insbesondere Kraftstofffilter, vorzugsweise in Form eines Dieselfilters, mit einem Filtermedium (16), das sowohl der Partikelabreinigung als auch der Koaleszenz von Wasser dient, das in einem das Filtermedium (16) durchströmenden Fluid mitgeführt ist, **dadurch gekennzeichnet, dass** das Filtermedium (16) zumindest einen antimikrobiellen Wirkstoff aufweist, der zumindest an das koaleszierte Wasser abgegeben wird.

2. Filter nach Anspruch 1, **dadurch gekennzeichnet, dass** das Filtermedium (16) plissiert ist und Polyethylenterephtalat-Fasern aufweist.

3. Filter nach Anspruch 1 oder 2, **dadurch gekennzeichnet, dass** in Fluidströmungsrichtung gesehen dem Filtermedium (16) nachfolgend und von diesem räumlich separiert eine Trennstufe (26) vorhanden ist, die das vom Filtermedium (16) stammende koalisierte Wasser vom sonstigen Fluid derart trennt, dass das Wasser und das sonstige Fluid an voneinander verschiedenen Stellen den Filter verlässt.

4. Filter nach einem der vorstehenden Ansprüche, **dadurch gekennzeichnet, dass** die Trennstufe aus einem Siebgewebe (26) gebildet ist, das vorzugsweise hydrophobe Eigenschaften aufweist und das von dem Filtermedium (16) umfasst ist.

5. Filter nach einem der vorstehenden Ansprüche, **dadurch gekennzeichnet, dass** zumindest ein antimikrobieller Wirkstoff eingesetzt ist, der mit dem koaleszierten Wasser eine Suspension bildend elektrisch leitend ist, vorzugsweise Zink-Pyrithion aufweist oder vollständig aus Zink-Pyrithion besteht.

6. Verwendung eines Filters, insbesondere nach einem der vorstehenden Ansprüche, **dadurch gekennzeichnet, dass** in einem Fluid, wie Kraftstoff, insbesondere in Form von Diesel, befindliches Wasser bei Durchströmen eines Filtermediums (16) zu Tropfen koalesziert und mit einem antimikrobiellen, vom Filtermedium (16) stammenden Wirkstoff, vorzugsweise in Form von Zink-Pyrithion, unter Bildung einer wässrigen Suspension versehen wird, die an einer Trennstufe (26) des Filters aus dem sonstigen Fluid abgeschieden wird.

7. Filtervorrichtung mit einem Filter nach einem der Ansprüche 1 bis 5, der geeignet ist zur Verwendung nach Anspruch 6, **dadurch gekennzeichnet, dass** das Filtermedium (16) zusammen mit einer Trennstufe für koalesziertes Wasser ein tauschbares Filterelement (14) bildet, das in einem Filtergehäuse (10) aufgenommen ist, das kopfseitig von einem Deckelteil (18) verschlossen ist und bodenseitig einen Wassersammelraum (38) aufweist.

8. Filtervorrichtung nach Anspruch 7, **dadurch gekennzeichnet, dass** der Wasserstand im Wassersammelraum (38) mittels einer Sensoreinrichtung (42) überwacht ist, die vorzugsweise auf dem Prinzip der Erfassung einer Widerstandsänderung durch abgeschiedenes Wasser beruht.

9. Verfahren zum Herstellen eines Filtermediums (16) für ein Filter nach einem der Ansprüche 1 bis 5, **dadurch gekennzeichnet, dass** der Auftrag eines antimikrobiellen Stoffs, vorzugsweise in Form von Zink-Pyrithion, in Form einer wässrigen Lösung auf ein Filtervlies des Filtermediums (16) erfolgt, vorzugsweise unter Einsatz eines Foulard-oder Sprühauftragverfahrens.

10. Verfahren nach Anspruch 9, **dadurch gekennzeichnet, dass** beim Auftrag des antimikrobiellen Wirkstoffs mittels des Sprühauftragverfahrens die Porengröße des Filtermediums (16) auf der Ansprühseite durch die Wirkstoffpartikel derart verkleinert wird, dass das Filtermedium (16) einen vorgebbaren Durchströmungsgradienten erhält und dass bei einem Sprühauftrag der Wirkstoffpartikel auf einer Abströmseite des Filtermediums (16) die Tiefenfiltrationseigenschaft des Filters verbessert ist.
